(19) Europäisches Patentamt
European Patent Office
Office européen des brevets

(11) **EP 3 889 661 B1**

(12) **EUROPEAN PATENT SPECIFICATION**

(45) Date of publication and mention
of the grant of the patent:
**03.05.2023  Bulletin 2023/18**

(21) Application number: **20179436.9**

(22) Date of filing: **11.06.2020**

(51) International Patent Classification (IPC):
***G02B 7/36*** *(2021.01)*      ***G03B 13/36*** *(2021.01)*
***H04N 5/232*** *(2006.01)*

(52) Cooperative Patent Classification (CPC):
**G03B 13/36; G02B 7/365; H04N 23/673**

(54) **FOCUSING METHOD AND APPARATUS, ELECTRONIC DEVICE AND STORAGE MEDIUM**

FOKUSSIERUNGSVERFAHREN UND -EINRICHTUNG, ELEKTRONISCHE VORRICHTUNG UND SPEICHERMEDIUM

PROCÉDÉ ET APPAREIL DE FOCALISATION, DISPOSITIF ÉLECTRONIQUE ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2020  CN 202010243515**

(43) Date of publication of application:
**06.10.2021  Bulletin 2021/40**

(73) Proprietor: **Infiray Technologies Co., Ltd.
Hefei, Anhui 230001 (CN)**

(72) Inventors:
  • **LIU, Jiankang
    Hefei, Anhui 230001 (CN)**
  • **LV, Xianmin
    Hefei, Anhui 230001 (CN)**

(74) Representative: **Biallo, Dario et al
Barzanò & Zanardo Milano S.p.A.
Via Borgonuovo, 10
20121 Milano (IT)**

(56) References cited:
WO-A1-2017/157154      CN-A- 107 888 836
CN-B- 103 217 855      CN-B- 107 888 836
US-A1- 2016 014 404      US-A1- 2016 277 667

## Description

## TECHNICAL FIELD

The present disclosure relates to the technical field of camera photography, and in particular to a focusing method, a focusing apparatus, an electronic device and a computer-readable storage medium.

## BACKGROUND

With the lower and lower price of infrared modules and the development of uncooled infrared imaging technology, more infrared products are applied in the fields of industrial temperature measurement, automobile night driving assistance, security monitoring, firefighting, consumer electronics, and the like. In the infrared products, the effects of temperature measurement and security monitoring are directly affected by clarity and contrast of an infrared image. In an infrared thermal imager product based on the infrared module, an urgent problem to be solved is how to make an image of a target collected by a lens to have best quality, that is, how to enable an optical focus position for the lens.

At present, most of the focusing methods for infrared images are similar to the focusing method for visible light images, that is, an automatic focusing method based on image quality. The automatic focusing method relies on sharpness evaluations of an imaging target at different focus positions, by which a focus position is quickly and accurately found by using a certain search strategy and the lens is moved to the focus position. Thus, the key to the focusing effect is an accurate sharpness evaluation function and the search strategy. However, unlike a visible light image, the infrared image bears disadvantages such as poor uniformity, rough imaging details, and low signal-to-noise ratio, and the evaluation value of the infrared image often fails to meet the requirements of unimodality and unbiasedness, resulting in failure of the sharpness evaluation function and the search strategy in a focusing process and thereby frequent focusing failures. For example, CN 103 217 855 B discloses an auto focusing method, which includes performing separate processing on normal illuminance and low illuminance in regard with selection of the focusing window. The method uses an upgraded hill climbing algorithm for the focusing search control policy, which includes finding an extremum value point by coarse focusing and function fitting, driving the motor to perform fine adjustment according to a hill climbing algorithm by a small step after reaching the extremum value point, so that the focusing can be more accurate. WO 2017/157154 A1 relates to an auto-focusing method, including: calculating a definition Va of a current frame picture of an image sensor when a lens is in a middle positon of an optical path, calculating a definition Vb of a current frame picture of the image sensor after moving the lens out of the optical path, calculating an absolute value of the difference between Va and Vb, determining whether the absolute value is less than or equal to a threshold, if so, determining that focusing is completed, otherwise, driving a lens group to move according to the difference. CN107888836A discloses a focusing method for a push-broom remote sensing camera based on a focal plane, which realizes smart focusing for a main focal plane of a push-broom remote sensing camera by using images with different focal lengths, and improves focusing speed and accuracy of determination of optimal focal plane. US 2016/0014404 A1 provides a system and method for automatic focus with self-calibration, which includes obtaining lens position calibration data used to capture a plurality of frames of a video sequence or still photographs, calculating at least of an updated SOC, an updated EOC, updated INF and depending on the lens position calibration data of the frames or still photographs, and using at least one of the updated SOC, EOC and INF to update a range of possible lens positions to capture a frame or photograph.

Therefore, a technical problem for those skilled in the art is how to avoid the failure of focusing due to the infrared image having large noise and multiple local extreme points.

## SUMMARY

An object of the present disclosure is to provide a focusing method for capturing an infrared image, a focusing apparatus for capturing an infrared image, an electronic device and a computer-readable storage medium, to avoid the focusing failure due to the infrared image having large noise and multiple local extreme points. The invention is defined by the claims annexed.

## BRIEF DESCRIPTION OF THE DRAWINGS

In order to more clearly illustrate the technical solutions in the embodiments of the present disclosure or in conventional technology, the drawings used in the description of the embodiments or the conventional technology are briefly described below. Apparently, the drawings in the following description show only some embodiments of the present disclosure, and those skilled in the art can obtain other drawings according to the provided drawings without any creative work. The drawings are used to provide a further understanding of the present disclosure, and constitute a part of the specification. The drawings are used to explain the present disclosure together with the following specific embodiments, and are not intended to limit the present disclosure. In the drawings:

Figure 1 is a flow chart of a focusing method according to an exemplary embodiment;

Figure 2 is a flow chart of an algorithm for determining a potential value according to an exemplary embodiment;

Figure **3** is a detailed flow chart of step S**103** shown in Figure **1;**

Figure **4** is a flow chart of a fine focusing operation in a case of n=**3** according to an exemplary embodiment;

Figure **5** is a schematic structural diagram of a focusing apparatus according to an exemplary embodiment; and

Figure **6** is a schematic structural diagram of an electronic device according to an exemplary embodiment.

## DETAILED DESCRIPTION OF THE EMBODIMENTS

The technical solutions in the embodiments of the present disclosure are clearly and completely described in the following with reference to the accompanying drawings in the embodiments of the present application. Apparently, the embodiments described here are only a part rather than all of the embodiments of the present application. Based on the embodiments of the present application, all other embodiments obtained by those skilled in the art without creative efforts fall into the scope of the present disclosure.

According to the embodiments of the present disclosure, a focusing method is provided to avoid the failure of focusing due to the infrared image having large noise and multiple local extreme points.

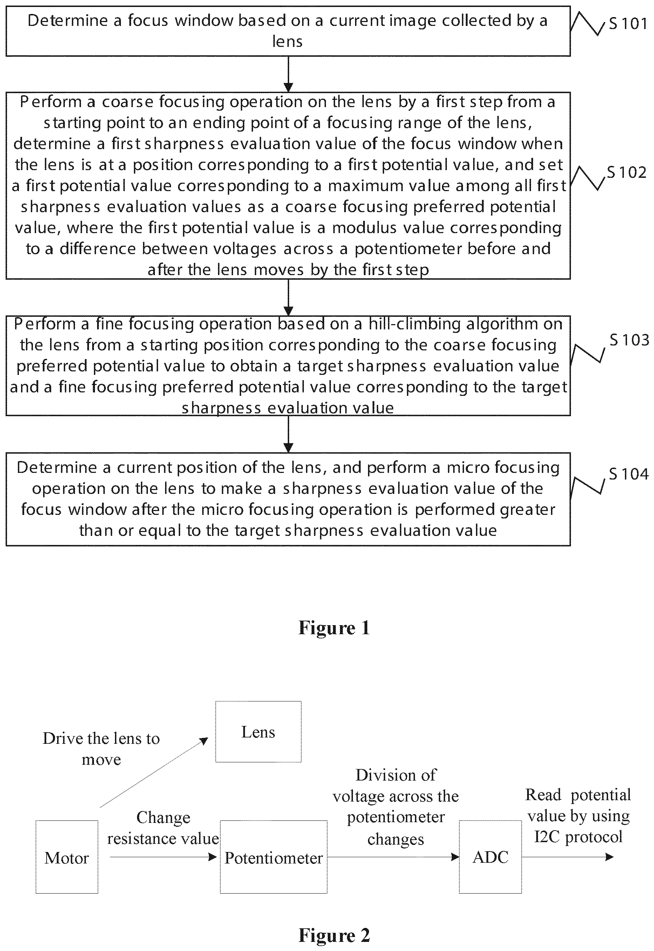

Reference is made to Figure **1,** which shows a flow chart of a focusing method according to an exemplary embodiment. As shown in Figure **1,** the method includes the following steps S**101** to S**104**.

In step S**101**, a focus window is determined based on a current image collected by a lens.

The purpose of the embodiment is to perform a focusing process on the lens, that is, to determine a focus position of the lens. The lens may be an infrared lens, and the collected current image may be an infrared image. In a specific implementation, in order to obtain a target having many edges in a field of view to facilitate evaluating by an image quality evaluation function and to improve focusing accuracy, a window selection process may be performed on the current image collected by the lens during the focusing process to select an area of interest, that is, to determine the focus window.

It can be understood that in this step, the entire current image may be selected as the focus window, but this will cause the amount of calculation performed by the image quality evaluation function to increase exponentially and thereby affect the timeliness of the focusing process. Generally, the lens directly faces a position of a target and the target of interest is in a central area, that is, the window selection process may be performed using a central area method. If the target is not located in the central area, the user can manually select a focus area. Practically, a self-adaptive window focusing method may be adopted in this step, in which the current image is divided into blocks, a gradient of each of the blocks is calculated and ranked, and the first few blocks having the largest gradients are selected as the focus window, thereby achieving self-adaptive window focusing. That is, this step may include: collecting the current image by the lens, and dividing the current image into blocks; and calculating a gradient of each of the blocks, and determining a block having a gradient greater than a preset value as the focus window. The preset value may be flexibly set based on the actual situation of the current image, and is not specifically limited herein.

In step S**102,** a coarse focusing operation is performed on the lens by a first step from a starting point to an ending point of a focusing range of the lens, a first sharpness evaluation value of the focus window, when the lens is at a position corresponding to a first potential value, is determined, and a first potential value corresponding to a maximum value among all first sharpness evaluation values is set as a coarse focusing preferred potential value. The first potential value is a modulus value corresponding to a difference between voltages across a potentiometer before and after the lens moves by the first step.

It should be noted that in an infrared focusing method in the related technology, if there is no object having a large temperature difference in the field of view, an infrared target has no obvious edges or the image has large noise, the sharpness evaluation value obtained by the image quality evaluation function may include multiple local extreme points, and thus the maximum sharpness evaluation value found by simply using a search strategy may be limited to the local extreme points. In view of this, in this step, the lens is driven by a motor to move through the entire focusing range of the lens by a large step (that is, the first step), that is, the coarse focusing operation is performed. The size of the first step may be [**0**, **1/2**] of the entire focusing range of the lens, for example, the size of the first step may be set to **1/4** of the entire focus range of the lens.

As shown in Figure **2,** when driving the lens to move, the motor continuously changes a resistance of a potentiometer, leading to changes in division of the voltage across the potentiometer. In the embodiment, a total voltage inputted across the potentiometer may be **9**V or **3.3**V. The potential value changes during the lens moves within a range allowed by a limit switch (for limiting a range within which the lens moves), and the total voltage across the potentiometer may be so determined as to enable a larger change of potential. By performing an analog-to-digital conversion, a voltage value can be converted to a specific value, that is, a potential value, and Arm may read the specific potential value using an **I2**C protocol.

During the coarse focusing process, a first sharpness evaluation value of the focus window when the lens is at a position corresponding to each of first potential values is recorded, the maximum value RFmax among the first sharpness evaluation values and the first potential value RPmax corresponding to the maximum value RFmax are obtained. Then, in subsequent focusing processes, the focus position is looked for around a position corresponding to the maximum potential value RPmax. Since the position corresponding to RPmax is close to the actual focus position, it can be avoided that the maximum focus position is limited to positions corresponding to local maximum values, the evaluation value has a better monotonicity around the position corresponding to RPmax, and the maximum evaluation value is easier to be found.

In the embodiment, the image quality evaluation function is not limited, that is, the specific implementation of determining the first sharpness evaluation value is not limited. In an embodiment, the determining a first sharpness evaluation value of the focus window when the lens is at a position corresponding to a first potential value includes: performing median filtering on the focus window to obtain an intermediate image when the lens is located at the position corresponding to the first potential value; and constructing an edge gradient map corresponding to the focus window based on the intermediate image, and determining a statistical characteristic of the edge gradient map as the first sharpness evaluation value of the focus window. In specific implementation, due to process and other reasons, the effect of the focusing process may be affected by the noise included in the infrared image, so it is required to perform filtering to remove the noise before calculating the evaluation function. Median filtering is performed instead of Gaussian filtering, so that detailed information can be retained after filtering. By extracting the edges of the image to construct the edge gradient map, part of the noise can be removed and details of the image are clearer. The statistical characteristics of the edge gradient map are calculated as the first sharpness evaluation value of the focus window.

In an embodiment, the constructing an edge gradient map corresponding to the focus window based on the intermediate image and determining a statistical characteristic of the edge gradient map as the first sharpness evaluation value of the focus window includes: calculating a horizontal gradient and a vertical gradient of the intermediate image, and constructing the edge gradient map corresponding to the focus window based on the horizontal gradient and the vertical gradient; and calculating an image gradient variance of the edge gradient map, and determining the image gradient variance as the first sharpness evaluation value of the focus window. In a specific implementation, the classic Sobel operator may be used in extracting the edges of the image. For example, the edges can be extracted by convolving two **3\*3** filters with pixels of the image in the image space.

The two filters are $\begin{bmatrix} -1 & 0 & 1 \\ -2 & 0 & 2 \\ -1 & 0 & 1 \end{bmatrix}$ and $\begin{bmatrix} -1 & -2 & -1 \\ 0 & 0 & 0 \\ 1 & 2 & 1 \end{bmatrix}$, which can be used to detect gradients in a direction of **0** degrees (horizontal direction) and a direction of **90** degrees (vertical direction), respectively.

The gradient in the horizontal direction is $\mathrm{Gx} = \begin{bmatrix} -1 & 0 & 1 \\ -2 & 0 & 2 \\ -1 & 0 & 1 \end{bmatrix} * \mathrm{f}(x, y)$, and the gradient in the vertical direction is $\mathrm{Gy} = \begin{bmatrix} -1 & -2 & -1 \\ 0 & 0 & 0 \\ 1 & 2 & 1 \end{bmatrix} * \mathrm{f}(x, y)$, where $*$ represents a convolution operation, f(x, y) represents a value of a pixel. A Sobel edge value is expressed as:

$$\mathrm{G}_{(x,y)} = \sqrt{\mathrm{G}_x^2 + \mathrm{G}_y^2}$$

which can be substituted by the following simple equation to reduce the amount of calculation:

$$\mathrm{G}_{(x,y)} = \left| \mathrm{G}_x \right| + \left| \mathrm{G}_y \right|$$

In a specific implementation, the gradient variance of the edge gradient map may be calculated. A variance of an image characterizes a degree of dispersion of the image. Fewer details included in the image and a smaller degree of dispersion of the image indicate a smaller variance, and more details included in the image and a greater degree of dispersion of the image indicate a larger variance. While calculating the gradient variance of the image to reflect the details of the image, values of points around the peak value point may be magnified to increase a slope of the evaluation value of the image, facilitating finding the peak value. The equation for calculating the gradient variance of the image is as follows:

$$\mathrm{F}_{\mathrm{var}} = \sum_{x=0}^{M-1} \sum_{y=0}^{N-1} [G(x, y) - \mu]^2$$

where G(x, y) represents the calculated edge gradient map, $\mu$ represents a mean gradient value of the edge gradient map, and M and N respectively represent a height and a width of the edge gradient map.

In step S**103**, a fine focusing operation based on a hill-climbing algorithm is performed on the lens from a starting position corresponding to the coarse focusing preferred potential value to obtain a target sharpness evaluation value and a fine focusing preferred potential value corresponding to the target sharpness evaluation value.

The purpose of this step is to search for the maximum sharpness evaluation value, that is, the target sharpness evaluation value DFmax, by using the hill-climbing algorithm around the maximum potential value RPmax. The maximum potential value RPmax obtained in the coarse focusing process may be regarded as a value corresponding to a position near the best focus position of the lens. Since the lens is moved by a large step in the coarse focusing process, and the position corresponding to the maximum value RPmax is still a certain distance away from the actual focus position, it is required to perform a fine focusing process around the position corresponding to the maximum value RPmax.

The hill-climbing search algorithm is the search strategy used in the fine focusing process. Unlike the Fibonacci search algorithm and the golden section search algorithm, in which the position of the lens is adjusted and the moving direction of the lens is changed frequently and extensively, by the hill-climbing search algorithm, continuous searching can be performed, and unnecessary travel is avoided, thereby saving time and reducing cumulative position errors. The hill-climbing search algorithm works by the following principle: initially, the lens is driven by a motor to move in a certain direction, and if the sharpness evaluation value increases which indicates that the focusing direction is correct, the lens is moved again; if the sharpness evaluation value decreases which indicates that the maximum sharpness evaluation value has been passed and the lens has passed the focus position corresponding to the maximum sharpness evaluation value, the lens should be moved in an opposite direction. In order to make the focusing more accurate, the size of the step may be reduced during focusing operations in the opposite direction to finely search for the maximum value.

It should be noted that in order to improve the anti-noise performance of the hill-climbing search algorithm, a multi-frame comparison algorithm (such as a three-frame comparison algorithm) may be adopted. According to the multi-frame comparison algorithm, if the sharpness evaluation value continuously decreases or increases for multiple consecutive frames (such as three frames), the motor moves in a reverse direction or a forward direction; otherwise, the motor moves in an original direction, which are described in detail in subsequent embodiments.

In step S**104**, a current position of the lens is determined, and a micro focusing operation is performed on the lens to make a sharpness evaluation value of the focus window after the micro focusing operation is performed greater than or equal to the target sharpness evaluation value.

In this step, the best focus position is obtained by performing the micro focusing operation around the position corresponding to the maximum potential value Rpmax based on DFmax which is obtained in the fine focusing process. In this process, the motor drives the lens to move by a very small step. During the moving of the lens, if the sharpness evaluation value of an image collected in real time is greater than or equal to DFmax, it can be determined that the lens is located in the best focus position, and the motor stops rotating; if the sharpness evaluation value of an image collected in real time is less than DFmax, a hill-climbing search is performed, which is similar to the hill-climbing search algorithm in the fine focusing operation, and if the sharpness evaluation value drops continuously, it can be determined that the lens has passed the best focus point, in which case the motor stops rotating and the focusing process is completed.

In the focusing method according to the present disclosure, first, a coarse focusing operation is performed on the lens covering the entire focusing range to determine a coarse focusing preferred potential value, that is, to roughly determine a focus position, thereby eliminating the influence of noise in the infrared image. Second, a fine focusing operation is performed based on a hill-climbing algorithm from a starting position corresponding to the coarse focusing preferred potential value to determine a lowest target sharpness evaluation value of the focus position. Finally, a micro focusing operation is performed, that is, the lens is adjusted to the focus position based on the target sharpness evaluation value. By performing the fine focusing operation and the micro focusing operation, the influence of multiple local extreme values in the infrared image can be eliminated. Therefore, with the focusing method according to the present disclosure, a better focusing effect can be achieved for the infrared image having large noise and multiple local extreme points, thereby achieving a higher focusing robustness.

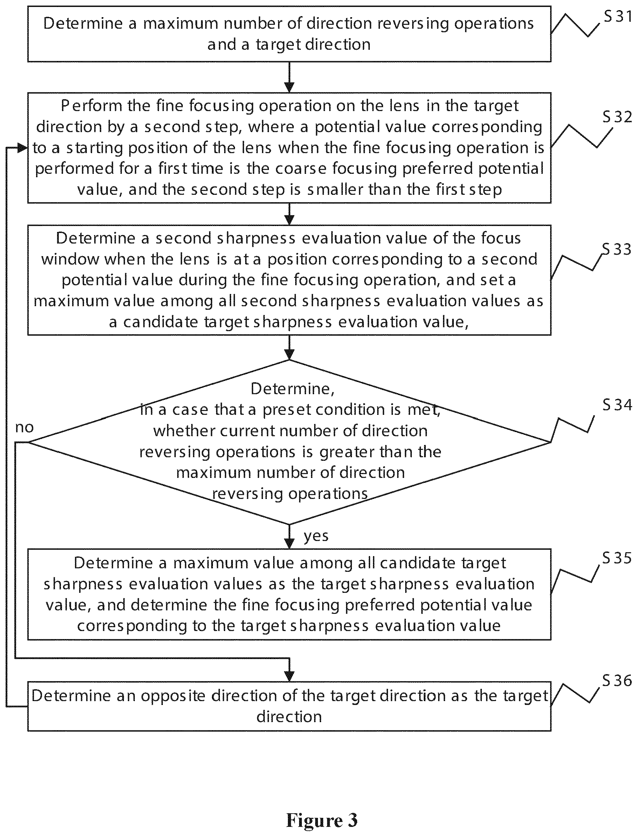

The fine focusing operation is described in detail below. As shown in Figure 3, step S103 in the above embodiment includes the following steps S**31** to S**36**.

In step S**31**, a maximum number of direction reversing operations and a target direction are determined.

In the embodiment, the multi-frame comparison algorithm is adopted. According to the multi-frame comparison algorithm, if the sharpness evaluation value continuously decreases or increases for n consecutive frames, the motor moves the lens in a reverse direction or a forward direction; otherwise, the motor moves the lens in the original direction, where n is an integer greater than **1**. In order to further improve the robustness, the hill-climbing algorithm is improved based on potential information in the embodiment. In the fine focusing operation, a second sharpness evaluation value of an i-th image of the focus window is f(i), and a corresponding potential value is p(i); a maximum number of direction reversing operations by the motor is CountMax, a maximum value obtained by performing a k-th reverse focusing operation is Fmax(k) (k<=CountMax), and in this case the potential value is Pmax(k).

In step S32, the fine focusing operation is performed on the lens in the target direction by a second step. A potential value corresponding to a starting position of the lens when the fine focusing operation is performed for a first time is the coarse focusing preferred potential value, and the second step is smaller than the first step.

In step S33, a second sharpness evaluation value of the focus window when the lens is at a position corresponding to a second potential value is determined during the fine focusing operation, and a maximum value among all second sharpness evaluation values is set as a candidate target sharpness evaluation value. The second potential value is a modulus value corresponding to a difference between voltages across the potentiometer before and after the lens moves by the second step.

In step S34, if a predetermined condition is met, it is determined whether a current number of direction reversing operations is greater than the maximum number of direction reversing operations. If the current number is greater than the maximum number, the fine focusing process proceeds to step S35; and if the current number is less than or equal to the maximum number, the fine focusing process proceeds to step S36. The predetermined condition is that n consecutive second sharpness evaluation values are in descending order.

In step S35, a maximum value among all candidate target sharpness evaluation values is determined as the target sharpness evaluation value, and the fine focusing preferred potential value corresponding to the target sharpness evaluation value is determined.

In step S36, an opposite direction of the target direction is determined as the target direction, after which the focusing method returns to step S32.

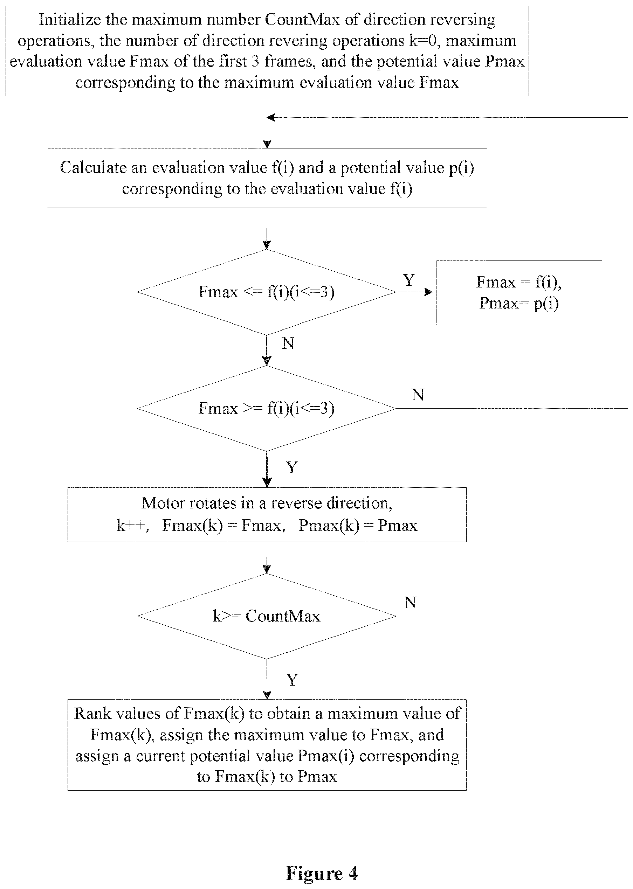

In a specific implementation, a reverse focusing count k is initialed to 1 in performing the first fine focusing operation, and a potential value corresponding to the starting position of the lens is the coarse focusing preferred potential value. A maximum value among the sharpness evaluation values of images collected at positions corresponding to first n second potential values is obtained as the maximum evaluation value Fmax, and the potential value Pmax corresponding to the maximum evaluation value Fmax, that is, the candidate fine focusing preferred potential value, is recorded. If Fmax is continuously less than sharpness evaluation values of images in next i frames (i<=n), f(i) is assigned to Fmax, Pmax is updated, and the motor continues to move forward. If Fmax is continuously greater than the sharpness evaluation values of images in the next i frames (i<=n), it can be determined that the motor has passed the focus position, the motor rotates in the reverse direction, the reverse focusing count k is increased by 1, Fmax is assigned to Fmax(k), and Pmax is assigned to Pmax (k). The above process is repeated until k is greater than or equal to CountMax, then values of Fmax(k) are ranked so as to obtain a maximum value of Fmax(k), the maximum value of Fmax(k) is assigned to Fmax, and a current potential value Pmax(i) is assigned to Pmax. The above process in case of n=3 is shown in Figure 4.

It can be understood that in order to make the focus position obtained in the fine focusing operation more accurate, the size of the step may be reduced each time the fine focusing operation is performed in the reverse direction, and the motor repeatedly searches around the focus position. That is, after determining the opposite direction of the target direction as the target direction, the focusing method further includes updating the second step. The second step is negatively correlated with the current number of direction reversing operations.

In the embodiment, with comprehensive consideration into the focusing effect and the time that the focusing takes, the maximum number CountMax of direction reversing operations can be set to 3. After performing three fine focusing operations, a maximum value among the obtained three candidate target sharpness evaluation values is obtained and determined as the target sharpness evaluation value and is assigned to Dfmax, and Rpmax is updated.

In an embodiment based on the above embodiments, the focusing method according to the present disclosure further includes: performing motion detection on the current image, and if a moving target is detected in the current image, re-performing the coarse focusing operation on the lens by the first step from the starting point to the ending point of the focusing range of the lens.

It should be understood that during the focusing process, if a moving target enters the field of view, the sharpness evaluation value of the focus window changes greatly, affecting the accuracy of the result of the focusing process. In view of this, motion detection may be performed during the focusing process. If a moving target is detected, it indicates that the focusing environment has changed. In such a case, the focusing operations should be re-performed. The above focusing process is re-performed in the new scene, that is, the coarse focusing operation is performed again.

A specific algorithm for the motion detection is not limited, for example, a frame difference algorithm may be adopted, which is not described herein. A maximum re-focusing number may be set in the focusing process to avoid the problem of constant focusing due to continuous changed scenes.

It should be noted that in an embodiment, the motion detection may be performed only on a selected focus window to reduce false triggering of the re-focusing process by a moving target which is not in the focus area. As a changing focal length may cause a change in the size of a focusing object, which may be falsely detected as a moving target by the frame difference algorithm though there is no moving object in the focus area, a strict threshold for determining a moving target may be set. For example, a threshold of a ratio of an area of the moving target to an area of the entire focus window may be set to a high value in a regional focusing process and a central regional focusing process, and a threshold of the number of moving windows may be set to a large value in a self-adaptive window focusing process.

A focusing apparatus according to the embodiments of the present disclosure is described below. Cross reference can be made to the focusing apparatus described below and the focusing method described above.

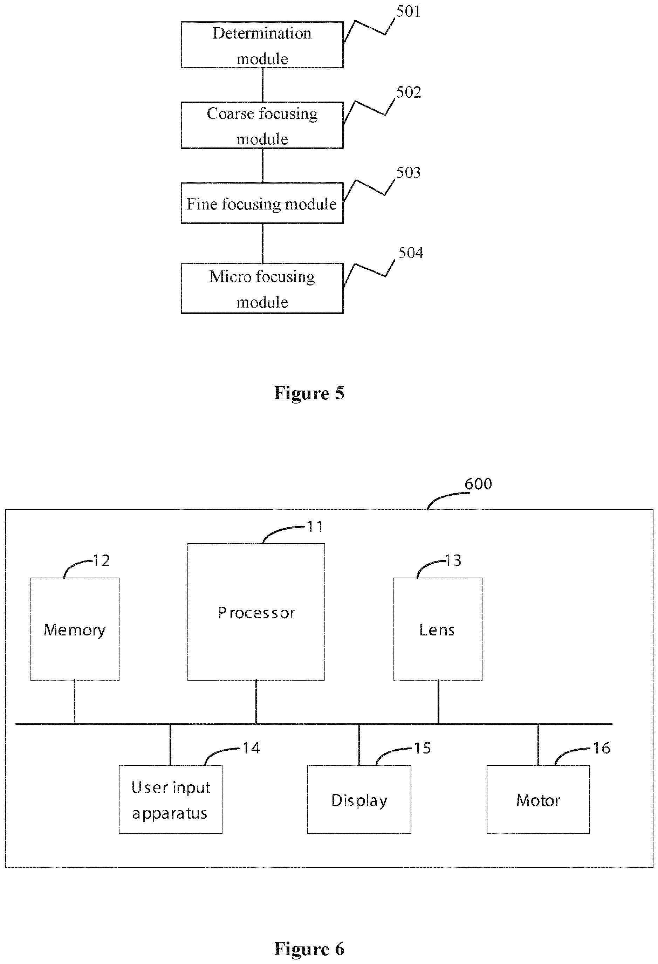

Reference is made to Figure **5**, which shows a schematic structural diagram of a focusing apparatus according to an exemplary embodiment. As shown in Figure **5**, the apparatus includes a determination module **501**, a coarse focusing module **502**, a fine focusing module **503**, and a micro focusing module **504**.

The determination module **501** is configured to determine a focus window based on a current image collected by a lens.

The coarse focusing module **502** is configured to perform a coarse focusing operation on the lens by a first step from a starting point to an ending point of a focusing range of the lens, determine a first sharpness evaluation value of the focus window when the lens is at a position corresponding to a first potential value, and set a first potential value corresponding to a maximum value among all first sharpness evaluation values as a coarse focusing preferred potential value, where the first potential value is a modulus value corresponding to a difference between voltages across a potentiometer before and after the lens moves by the first step.

The fine focusing module **503** is configured to perform a fine focusing operation based on a hill-climbing algorithm on the lens from a starting position corresponding to the coarse focusing preferred potential value to obtain a target sharpness evaluation value and a fine focusing preferred potential value corresponding to the target sharpness evaluation value.

The micro focusing module **504** is configured to determine a current position of the lens, and perform a micro focusing operation on the lens to make a sharpness evaluation value of the focus window after the micro focusing process is performed greater than or equal to the target sharpness evaluation value.

In the focusing apparatus according to the present disclosure, first, a coarse focusing operation is performed on the lens covering the entire focusing range of the lens to determine a coarse focusing preferred potential value, that is, to roughly determine a focus position, to eliminate the influence of noise in the infrared image. Second, a fine focusing operation is performed based on a hill-climbing algorithm from a starting position corresponding to the coarse focusing preferred potential value to determine a lowest target sharpness evaluation value of the focus position. Finally, a micro focusing operation is performed, that is, the lens is adjusted to the focus position based on the target sharpness evaluation value. By performing the fine focusing operation and the micro focusing operation, the influence of multiple local extreme values in the infrared image can be eliminated. Therefore, with the focusing apparatus according to the present disclosure, a better focusing effect can be achieved for the infrared image having large noise and multiple local extreme points, thereby achieving a higher focusing robustness.

In an embodiment based on the above embodiments, the determination module **501** includes a division unit and a first determination unit.

The blocking unit is configured to collect the current image by the lens, and divide the current image into blocks.

The first determination unit is configured to calculate a gradient of each of the blocks, and determine a block having a gradient greater than a preset value as the focus window.

In an embodiment based on the above embodiments, the coarse focusing module **502** includes a first performing unit, a filtering unit, a constructing unit, and a first setting unit.

The first performing unit is configured to perform the coarse focusing operation on the lens by the first step from the starting point to the ending point of the focusing range of the lens.

The filtering unit is configured to perform median filtering on the focus window to obtain an intermediate image when the lens is located at the position corresponding to the first potential value.

The constructing unit is configured to construct an edge gradient map corresponding to the focus window based on the intermediate image, and determine a statistical characteristic of the edge gradient map as the first sharpness evaluation value of the focus window.

The first setting unit is configured to set the first potential value corresponding to the maximum value among all the first sharpness evaluation values as the coarse focusing preferred potential value.

In an embodiment based on the above embodiments, the constructing unit includes a first calculating subunit and a second calculating subunit.

The first calculating subunit is configured to calculate a horizontal gradient and a vertical gradient of the intermediate image, and construct the edge gradient map corresponding to the focus window based on the horizontal gradient and the vertical gradient.

The second calculating subunit is configured to calculate an image gradient variance of the edge gradient map, and determine the image gradient variance as the first sharpness evaluation value of the focus window.

In an embodiment based on the above embodiments, the apparatus further includes a detection module.

The detection module is configured to perform motion detection on the current image, and trigger the coarse focusing module **502** to operate again if a moving target is detected in the current image.

In an embodiment based on the above embodiments, the fine focusing module **503** includes a second determination unit, a second performing unit, a second setting unit, a judgment unit, a third determination unit, and a fourth determination unit.

The second determination unit is configured to determine a maximum number of direction reversing operations and a target direction.

The second performing unit is configured to perform the fine focusing operation on the lens in the target direction by a second step, where a potential value corresponding to a starting position of the lens when the fine focusing operation is performed for a first time is the coarse focusing preferred potential value, and the second step is smaller than the first step.

The second setting unit is configured to determine a second sharpness evaluation value of the focus window when the lens is at a position corresponding to a second potential value during the fine focusing operation, and set a maximum value among all second sharpness evaluation values as a candidate target sharpness evaluation value, where the second potential value is a modulus value corresponding to a difference between voltages across the potentiometer before and after the lens moves by the second step.

The judgment unit is configured to, if a predetermined condition is met, determine whether a current number of direction reversing operations is greater than the maximum number of direction reversing operations, where the predetermined condition is that n consecutive second sharpness evaluation values are in descending order, trigger the third determination unit to operate if the current number of direction reversing operations is greater than the maximum number of direction reversing operations, and trigger the fourth determination unit to operate if the current number of direction reversing operations is less than or equal to the maximum number of direction reversing operations.

The third determination unit is configured to determine a maximum value among all candidate target sharpness evaluation values as the target sharpness evaluation value, and determine the fine focusing preferred potential value corresponding to the target sharpness evaluation value.

The fourth determination unit is configured to determine an opposite direction of the target direction as the target direction, and trigger the second performing unit to operate again.

In an embodiment based on the above embodiments, the fourth determination unit is configured to determine an opposite direction of the target direction as the target direction, update the second step, and trigger the second performing unit to operate again. The second step is negatively correlated with the current number of direction reversing operations.

Operating of the modules in the apparatus according to the above embodiments has been described in detail in the above-described method embodiments, which therefore are not elaborated herein.

An electronic device is further provided according to the present disclosure. Reference is made to Figure **6,** which shows a schematic structural diagram of an electronic device **600** according to an exemplary embodiment. As shown in Figure **6,** the device may include a processor **11** and a memory **12.** The electronic device **600** may further include a lens **13,** a user input apparatus **14,** a display **15,** and a motor **16.**

The processor **11** is configured to control the overall operation of the electronic device **600** to perform all or some of the steps in the above focusing method. The processor may include an ARM and a DSP. The ARM is configured to perform logic determination, motor drive control, and I2C communication protocol. DSP may be configured to perform calculations of an evaluation function and a hill-climbing algorithm to achieve focusing, and the DSP may further be configured to perform motion detection to re-perform the focusing process if a moving target is detected.

The memory **12** is configured to store various types of data to support the operation of the electronic device **600,** and the data may include codes such as code for focusing, code for motor control, and code for motion detection. The memory **12** may include any type of volatile storage device or non-volatile storage device or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk, or an optical disk.

The motor **16** is configured to drive the lens **13** to move. The lens **13,** provided with an infrared sensor, is configured to collect an infrared image and send the infrared image to the processor **11** for processing. By using the user input apparatus **14,** the user can select a window by drawing a rectangle on a webpage and click a focus button to achieve focusing, thereby realizing interaction. The display **15** is configured to display the infrared image, and the user can view the focusing effect on the display.

In another embodiment, a computer-readable storage medium storing program instructions is further provided. The program instructions, when executed by a processor, cause the processor to perform the focusing method. For example, the computer-readable storage medium may be the memory **12** storing the program instructions, and the program instructions may be executed by the processor **11** in the electronic device **600** to perform the focusing method.

Embodiments of the present disclosure are described in a progressive manner, each of the embodiments emphasizes differences from other embodiments, and the same or similar parts among the embodiments can be referred to each other. Since device embodiments are similar to method embodiments, the description thereof is relatively simple, and reference may be made to the description of the method embodiments for relevant parts.

It should be further noted that the relationship terminologies such as "first", "second", and the like are only used herein to distinguish one entity or operation from another, rather than to necessitate or imply that the actual relationship or order exists between the entities or operations. Furthermore, terms of "include", "comprise" or any other variants are intended to be non-exclusive. Therefore, a process, method, article or device including a plurality of elements includes not only the elements but also other elements that are not enumerated, or also include the elements inherent for the process, method, article or device. Unless expressively limited otherwise, the statement "comprising (including) one..." does not exclude the case that other similar elements may exist in the process, method, article or device.

## Claims

1. A focusing method for capturing an infrared image, comprising:

     determining (S**101**) a focus window based on a current image collected by a lens;
     performing (S**102**) a coarse focusing operation on the lens by a first step from a starting point to an ending point of a focusing range of the lens, determining a first sharpness evaluation value of the focus window when the lens is at a position corresponding to each first potential value, and setting a first potential value corresponding to a maximum value among all first sharpness evaluation values as a coarse focusing preferred potential value, wherein the first potential value is a modulus value corresponding to a difference between voltages across a potentiometer before and after the lens moves by the first step;
     performing (S**103**) a fine focusing operation based on a hill-climbing algorithm on the lens from a starting position corresponding to the coarse focusing preferred potential value to obtain a target sharpness evaluation value and a fine focusing preferred potential value corresponding to the target sharpness evaluation value; and
     performing (S**104**) a micro focusing operation on the lens around the position corresponding to the coarse focusing preferred potential value, to make a sharpness evaluation value of the focus window after the micro focusing process is performed greater than or equal to the target sharpness evaluation value,

wherein the performing (S**103**) a fine focusing operation based on a hill-climbing algorithm on the lens from a starting position corresponding to the coarse focusing preferred potential value to obtain a target sharpness evaluation value and a fine focusing preferred potential value corresponding to the target sharpness evaluation value comprise:

     determining (S**31**) a maximum number of direction reversing operations and a target direction, and performing (S**32**) the fine focusing operation on the lens in the target direction by a second step, wherein a potential value corresponding to a starting position of the lens when the fine focusing operation is performed for a first time is the coarse focusing preferred potential value, and the second step is smaller than the first step;
     determining (S**33**) a second sharpness evaluation value of the focus window when the lens is at a position corresponding to a second potential value during the fine focusing operation, and setting a maximum value among all second sharpness evaluation values as a candidate target sharpness evaluation value, wherein the second potential value is a modulus value corresponding to a difference between voltages across the potentiometer before and after the lens moves by the second step;
     determining (S**34**), in a case that a predetermined condition is met, whether a current number of direction reversing operations is greater than the maximum number of direction reversing operations, wherein the predetermined condition is that n consecutive second sharpness evaluation values are in descending order;
     determining (S**35**), in a case that the current number of direction reversing operations is greater than the maximum number of direction reversing operations, a maximum value among all candidate target sharpness evaluation values as the target sharpness evaluation value, and determining the fine focusing preferred potential value corresponding to the target sharpness evaluation value; and
     determining (S**36**), in a case that the current number of direction reversing operations is less than or equal to the maximum number of direction reversing operations, an opposite direction of the target direction as the target direction, and re-performing the fine focusing operation on the lens in the target direction by the second step.

2. The focusing method according to claim **1,** wherein the determining a focus window based on a current image collected by a lens comprises:

   collecting the current image by the lens, and dividing the current image into blocks; and
   calculating a gradient of each of the blocks, and determining a block having a gradient greater than a preset value as the focus window.

3. The focusing method according to claim **1,** wherein the determining a first sharpness evaluation value of the focus window when the lens is at a position corresponding to a first potential value comprises:

   performing median filtering on the focus window to obtain an intermediate image when the lens is located at the position corresponding to the first potential value; and
   constructing an edge gradient map corresponding to the focus window based on the intermediate image, and determining a statistical characteristic of the edge gradient map as the first sharpness evaluation value of the focus window.

4. The focusing method according to claim **3,** wherein the constructing an edge gradient map corresponding to the focus window based on the intermediate image and determining a statistical characteristic of the edge gradient map as the first sharpness evaluation value of the focus window comprises:

   calculating a horizontal gradient and a vertical gradient of the intermediate image, and constructing the edge gradient map corresponding to the focus window based on the horizontal gradient and the vertical gradient; and
   calculating an image gradient variance of the edge gradient map, and determining the image gradient variance as the first sharpness evaluation value of the focus window.

5. The focusing method according to claim **1,** further comprising:
   performing motion detection on the current image, and re-performing the coarse focusing operation on the lens by the first step from the starting point to the ending point of the focusing range of the lens in a case that a moving target is detected in the current image.

6. The focusing method according to claim **1,** wherein after determining the opposite direction of the target direction as the target direction, the focusing method further comprises:
   updating the second step, wherein the second step is negatively correlated with the current number of direction reversing operations.

7. A focusing apparatus for capturing an infrared image, comprising:

   a determination module (**501**), configured to determine a focus window based on a current image collected by a lens;
   a coarse focusing module (**502**), configured to perform a coarse focusing operation on the lens by a first step from a starting point to an ending point of a focusing range of the lens, determine a first sharpness evaluation value of the focus window when the lens is at a position corresponding to each first potential value, and set a first potential value corresponding to a maximum value among all first sharpness evaluation values as a coarse focusing preferred potential value, wherein the first potential value is a modulus value corresponding to a difference between voltages across a potentiometer before and after the lens moves by the first step;
   a fine focusing module (**503**), configured to perform a fine focusing operation based on a hill-climbing algorithm on the lens from a starting position corresponding to the coarse focusing preferred potential value to obtain a target sharpness evaluation value and a fine focusing preferred potential value corresponding to the target sharpness evaluation value; and
   a micro focusing module (**504**), configured to perform a micro focusing operation on the lens around the position corresponding to the coarse focusing preferred potential value, to make a sharpness evaluation value of the focus window after the micro focusing process is performed greater than or equal to the target sharpness evaluation value,
   wherein the fine focusing module (**503**) comprises:

   a second determination unit, configured to determine a maximum number of direction reversing operations and a target direction;
   a second performing unit, configured to perform the fine focusing operation on the lens in the target direction by a second step, wherein a potential value corresponding to a starting position of the lens when the fine focusing operation is performed for a first time is the coarse focusing preferred potential value, and the second step is smaller than the first step;a second setting unit, configured to determine a second sharpness evaluation value of the focus window when the lens is at a position corresponding to a second potential value during the fine focusing operation, and set a maximum value among all second sharpness evaluation values as a candidate target sharpness evaluation value, wherein the second potential value is a modulus value corresponding to a difference between voltages across the potentiometer before and after the lens moves by the second step;

a judgment unit, configured to determine, in a case that a predetermined condition is met, whether a current number of direction reversing operations is greater than the maximum number of direction reversing operations, wherein the predetermined condition is that n consecutive second sharpness evaluation values are in descending order, trigger the third determination unit to operate if the current number of direction reversing operations is greater than the maximum number of direction reversing operations, and trigger the fourth determination unit to operate if the current number of direction reversing operations is less than or equal to the maximum number of direction reversing operations;

a third determination unit, configured to determine a maximum value among all candidate target sharpness evaluation values as the target sharpness evaluation value, and determine the fine focusing preferred potential value corresponding to the target sharpness evaluation value; and

a fourth determination unit, configured to determine an opposite direction of the target direction as the target direction, and trigger the second performing unit to operate again.

8. The focusing apparatus according to claim **7,** wherein the determination module (**501**) comprises:

a division unit, configured to collect the current image by the lens, and divide the current image into blocks; and

a first determination unit, configured to calculate a gradient of each of the blocks, and determine a block having a gradient greater than a preset value as the focus window.

9. The focusing apparatus according to claim **7,** wherein the coarse focusing module comprises (**502**):

a first performing unit, configured to perform the coarse focusing operation on the lens by the first step from the starting point to the ending point of the focusing range of the lens;

a filtering unit, configured to perform median filtering on the focus window to obtain an intermediate image when the lens is located at the position corresponding to the first potential value;

a constructing unit, configured to construct an edge gradient map corresponding to the focus window based on the intermediate image, and determine a statistical characteristic of the edge gradient map as the first sharpness evaluation value of the focus window; and

a first setting unit, configured to set the first potential value corresponding to the maximum value among all the first sharpness evaluation values as the coarse focusing preferred potential value.

10. The focusing apparatus according to claim **9,** wherein the constructing unit comprises:

a first calculating subunit, configured to calculate a horizontal gradient and a vertical gradient of the intermediate image, and construct the edge gradient map corresponding to the focus window based on the horizontal gradient and the vertical gradient; and

a second calculating subunit, configured to calculate an image gradient variance of the edge gradient map, and determine the image gradient variance as the first sharpness evaluation value of the focus window.

11. The focusing apparatus according to claim **7,** further comprising:

a detection module, configured to perform motion detection on the current image, and trigger, in a case that a moving target is detected in the current image, the coarse focusing module (**502**) to re-perform the coarse focusing operation on the lens by the first step from the starting point to the ending point of the focusing range of the lens.

12. An electronic device (**600**), comprising:

a memory (**12**), configured to store a computer program; and

a processor (**11**), configured to perform the focusing method according to any one of claims **1** to **6** when executing the computer program.

13. A computer-readable storage medium storing a computer program, wherein the computer program, when executed by a processor, causes the processor to perform the focusing method according to any one of claims **1** to **6.**

**Patentansprüche**

1. Fokussierungsverfahren zum Aufnehmen eines Infrarotbildes, umfassend:

Bestimmen (**S101**) eines Fokusfensters auf der Grundlage eines aktuellen, von einem Objektiv erfassten Bildes;

Durchführen (**S102**) eines Grobfokussierungsvorgangs an dem Objektiv in einem ersten Schritt von einem Startpunkt zu einem Endpunkt eines Fokussierungsbereichs des Objektivs, Bestimmen eines ersten Schärfebewertungswerts des Fokusfensters, wenn sich das Objektiv an einer Position befindet, die jedem ersten Potentialwert entspricht, und Einstellen eines ersten Potentialwerts, der einem Maximalwert unter allen ersten Schärfebewertungswerten entspricht, als einen bevorzugten Grobfokussierungspotentialwert, wobei der erste Potentialwert ein Modulwert ist, der einer Differenz zwischen Spannungen an einem Potentiometer vor und nach der Bewegung des Objektivs in dem ersten Schritt entspricht;

Durchführen (**S103**) eines Feinfokussierungsvorgangs auf der Grundlage eines Hill-Climbing-Algorithmus auf dem Objektiv von einer Startposition aus, die dem bevorzugten Grobfokussierungspotenzialwert entspricht, um einen Zielschärfebewertungswert und einen bevorzugten Feinfokussierungspotenzialwert zu erhalten, der dem Zielschärfebewertungswert entspricht; und

Durchführen (**S104**) eines Mikrofokussierungsvorgangs an dem Objektiv um die Position herum, die dem bevorzugten Grobfokussierungspotenzialwert entspricht, um einen Schärfebewertungswert des Fokusfensters nach dem Durchführen des Mikrofokussierungsvorgangs größer oder gleich dem Zielschärfebewertungswert zu machen,

wobei das Durchführen (**S103**) eines Feinfokussierungsvorgangs auf der Grundlage eines Hill-Climbing-Algorithmus auf dem Objektiv von einer Startposition aus, die dem bevorzugten Grobfokussierungspotenzialwert entspricht, um einen Zielschärfebewertungswert und einen bevorzugten Feinfokussierungspotenzialwert zu erhalten, der dem Zielschärfebewertungswert entspricht, umfasst:

Bestimmen (**S31**) einer maximalen Anzahl von Richtungsumkehrvorgängen und einer Zielrichtung, und Durchführen (**S32**) des Feinfokussierungsvorgangs an dem Objektiv in der Zielrichtung in einem zweiten Schritt, wobei ein Potentialwert, der einer Startposition des Objektivs entspricht, wenn der Feinfokussierungsvorgang zum ersten Mal durchgeführt wird, der bevorzugte Grobfokussierungspotenzialwert ist, und der zweite Schritt kleiner als der erste Schritt ist;

Bestimmen (**S33**) eines zweiten Schärfebewertungswerts des Fokusfensters, wenn sich das Objektiv während des Feinfokussierungsvorgangs an einer Position befindet, die einem zweiten Potentialwert entspricht, und Festlegen eines Maximalwerts unter allen zweiten Schärfebewertungswerten als einen Kandidaten-Zielschärfebewertungswert, wobei der zweite Potentialwert ein Modulwert ist, der einer Differenz zwischen Spannungen an dem Potentiometer vor und nach der Bewegung des Objektivs in dem zweiten Schritt entspricht;

Bestimmen (**S34**), in einem Fall, dass eine vorbestimmte Bedingung erfüllt ist, ob eine aktuelle Anzahl von Richtungsumkehrvorgängen größer als die maximale Anzahl von Richtungsumkehrvorgängen ist, wobei die vorbestimmte Bedingung ist, dass n aufeinanderfolgende zweite Schärfebewertungswerte in absteigender Reihenfolge sind;

Bestimmen (**S35**), in einem Fall, dass die aktuelle Anzahl von Richtungsumkehrvorgängen größer ist als die maximale Anzahl von Richtungsumkehrvorgängen, eines Maximalwerts unter allen Kandidaten-Zielschärfebewertungswerten als den Zielschärfebewertungswert, und Bestimmen des bevorzugten Feinfokussierungspotenzialwerts, der dem Zielschärfebewertungswert entspricht; und

Bestimmen (**S36**), in einem Fall, dass die aktuelle Anzahl von Richtungsumkehrvorgängen kleiner oder gleich der maximalen Anzahl von Richtungsumkehrvorgängen ist, einer der Zielrichtung entgegengesetzten Richtung als die Zielrichtung, und erneutes Durchführen des Feinfokussierungsvorgangs an dem Objektiv in der Zielrichtung in dem zweiten Schritt.

2. Fokussierungsverfahren nach Anspruch **1,** wobei das Bestimmen eines Fokusfensters auf der Grundlage eines von einem Objektiv erfassten aktuellen Bildes umfasst:

Aufnehmen des aktuellen Bildes durch das Objektiv, und

Unterteilen des aktuellen Bildes in Blöcke; und Berechnen eines Gradienten für jeden der Blöcke und Bestimmen eines Blocks mit einem Gradienten, der größer als ein voreingestellter Wert ist, als das Fokusfenster.

3. Fokussierungsverfahren nach Anspruch **1,** wobei das Bestimmen eines ersten Schärfebewertungswertes des Fokusfensters, wenn sich das Objektiv in einer Position befindet, die einem ersten Potentialwert entspricht, umfasst:

Durchführen einer Medianfilterung auf dem Fokusfenster, um ein Zwischenbild zu erhalten, wenn sich das Objektiv an der Position befindet, die dem ersten Potentialwert entspricht; und Konstruieren einer Kantengradientenkarte, die dem Fokusfenster entspricht, basierend auf dem Zwischenbild, und Bestimmen einer statistischen Eigenschaft der Kantengradientenkarte als den ersten Schärfebewertungswert des Fokusfensters.

4. Fokussierungsverfahren nach Anspruch **3,** wobei das Konstruieren einer Kantengradientenkarte, die dem Fokusfenster entspricht, auf der Grundlage des Zwischenbildes und das Bestimmen einer statistischen Eigenschaft der Kantengradientenkarte als der erste Schärfebewertungswert des Fokusfensters umfasst:

Berechnen eines horizontalen Gradienten und eines vertikalen Gradienten des Zwischenbildes und Konstruieren der Kantengradientenkarte, die dem Fokusfenster entspricht, auf der Grundlage des horizontalen Gradienten und des vertikalen Gradienten; und Berechnen einer Bildgradientenvarianz der Kantengradientenkarte und Bestimmen der Bildgradientenvarianz als den ersten Schärfebewertungswert des Fokusfensters.

5. Fokussierungsverfahren nach Anspruch **1,** ferner umfassend:
Durchführen einer Bewegungserfassung auf dem aktuellen Bild und erneutes Durchführen des Grobfokussierungsvorgangs auf dem Objektiv in dem ersten Schritt vom Startpunkt zum Endpunkt des Fokussierungsbereichs des Objektivs in einem Fall, dass ein sich bewegendes Ziel im aktuellen Bild erfasst wird.

6. Fokussierungsverfahren nach Anspruch **1,** wobei das Fokussierungsverfahren nach dem Bestimmen der der Zielrichtung entgegengesetzten Richtung als die Zielrichtung ferner umfasst:
Aktualisieren des zweiten Schritts, wobei der zweite Schritt negativ mit der aktuellen Anzahl der Richtungsumkehrvorgänge korreliert ist.

7. Fokussierungsvorrichtung zum Aufnehmen eines Infrarotbildes, umfassend:

ein Bestimmungsmodul (**501**), das so konfiguriert ist, dass es ein Fokusfenster auf der Grundlage eines von einem Objektiv erfassten aktuellen Bildes bestimmt; ein Grobfokussierungsmodul (**502**), das so konfiguriert ist, dass es einen Grobfokussierungsvorgang an dem Objektiv in einem ersten Schritt von einem Startpunkt zu einem Endpunkt eines Fokussierungsbereichs der Objektiv durchführt, einen ersten Schärfebewertungswert des Fokusfensters bestimmt, wenn sich das Objektiv an einer Position befindet, die jedem ersten Potentialwert entspricht, und einen ersten Potentialwert, der einem Maximalwert unter allen ersten Schärfebewertungswerten entspricht, als einen bevorzugten Grobfokussierungspotentialwert einstellt, wobei der erste Potentialwert ein Modulwert ist, der einer Differenz zwischen Spannungen an einem Potentiometer vor und nach der Bewegung der Objektiv in dem ersten Schritt entspricht; ein Feinfokussierungsmodul (**503**), das so konfiguriert ist, dass es einen Feinfokussierungsvorgang auf der Grundlage eines Hill-Climbing-Algorithmus auf dem Objektiv von einer Startposition aus durchführt, die dem bevorzugten Grobfokussierungspotenzialwert entspricht, um einen Zielschärfebewertungswert und einen bevorzugten Feinfokussierungspotenzialwert zu erhalten, der dem Zielschärfebewertungswert entspricht; und ein Mikrofokussierungsmodul (**504**), das so konfiguriert ist, dass es einen Mikrofokussierungsvorgang an der Objektiv um die Position herum durchführt, die dem bevorzugten Grobfokussierungspotenzialwert entspricht, um einen Schärfebewertungswert des Fokusfensters nach Durchführung des Mikrofokussierungsvorgangs größer oder gleich dem Zielschärfebewertungswert zu machen, wobei das Feinfokussierungsmodul (**503**) umfasst:

eine zweite Bestimmungseinheit, die so konfiguriert ist, dass sie eine maximale Anzahl von Richtungsumkehrvorgängen und eine Zielrichtung bestimmt; eine zweite Durchführungseinheit, die so konfiguriert ist, dass sie den Feinfokussierungsvorgang an dem Objektiv in der Zielrichtung in einem zweiten Schritt durchführt, wobei ein Potentialwert, der einer Startposition des Objektivs entspricht, wenn der Feinfokussierungsvorgang zum ersten Mal durchgeführt wird, der bevorzugte Grobfokussierungspotentialwert ist, und der zweite Schritt kleiner als der erste Schritt ist; eine zweite Einstellungseinheit, die so konfiguriert ist, dass sie einen zweiten Schärfebewertungswert des Fokusfensters bestimmt, wenn sich das Objektiv während des Feinfokussierungsvorgangs an einer Position befindet, die einem zweiten Potentialwert entspricht, und einen Maximalwert unter allen zweiten Schärfebewertungswerten als einen Kandidaten-Zielschärfebewertungswert einstellt,

wobei der zweite Potentialwert ein Modulwert ist, der einer Differenz zwischen Spannungen an dem Potentiometer vor und nach der Bewegung des Objektivs in dem zweiten Schritt entspricht;

eine Beurteilungseinheit, die so konfiguriert ist, dass sie in einem Fall, dass eine vorbestimmte Bedingung erfüllt ist, bestimmt, ob eine aktuelle Anzahl von Richtungsumkehrvorgängen größer ist als die maximale Anzahl von Richtungsumkehrvorgängen, wobei die vorbestimmte Bedingung darin besteht, dass n aufeinanderfolgende zweite Schärfebewertungswerte in absteigender Reihenfolge sind, die dritte Bestimmungseinheit veranlasst, zu arbeiten, wenn die aktuelle Anzahl von Richtungsumkehrvorgängen größer ist als die maximale Anzahl von Richtungsumkehrvorgängen, und die vierte Bestimmungseinheit veranlasst, zu arbeiten, wenn die aktuelle Anzahl von Richtungsumkehrvorgängen kleiner oder gleich der maximalen Anzahl von Richtungsumkehrvorgängen ist;

eine dritte Bestimmungseinheit, die so konfiguriert ist, dass sie einen Maximalwert unter allen Kandidaten-Zielschärfebewertungswerten als den Zielschärfebewertungswert bestimmt und den bevorzugten Feinfokussierungspotenzialwert entsprechend dem Zielschärfebewertungswert bestimmt; und

eine vierte Bestimmungseinheit, die so konfiguriert ist, dass sie eine der Zielrichtung entgegengesetzte Richtung als die Zielrichtung bestimmt und die zweite Durchführungseinheit veranlasst, erneut zu arbeiten.

8. Fokussierungsvorrichtung nach Anspruch **7,** wobei das Bestimmungsmodul (**501**) umfasst:

  eine Teilungseinheit, die so konfiguriert ist, dass sie das aktuelle Bild durch das Objektiv erfasst und das aktuelle Bild in Blöcke unterteilt; und eine erste Bestimmungseinheit, die so konfiguriert ist, dass sie einen Gradienten für jeden der Blöcke berechnet und einen Block mit einem Gradienten, der größer als ein voreingestellter Wert ist, als das Fokusfenster bestimmt.

9. Fokussierungsvorrichtung nach Anspruch **7,** wobei das Grobfokussierungsmodul (**502**) umfasst:

  eine erste Durchführungseinheit, die so konfiguriert ist, dass sie den Grobfokussierungsvorgang an dem Objektiv in dem ersten Schritt vom Startpunkt zum Endpunkt des Fokussierungsbereichs des Objektivs durchführt;

eine Filterungseinheit, die so konfiguriert ist, dass sie eine Medianfilterung am Fokusfenster durchführt, um ein Zwischenbild zu erhalten, wenn sich das Objektiv an der Position befindet, die dem ersten Potentialwert entspricht;

eine Konstruktionseinheit, die so konfiguriert ist, dass sie eine dem Fokusfenster entsprechende Kantengradientenkarte auf der Grundlage des Zwischenbildes konstruiert und eine statistische Eigenschaft der Kantengradientenkarte als den ersten Schärfebewertungswert des Fokusfensters bestimmt; und

eine erste Einstellungseinheit, die so konfiguriert ist, dass sie den ersten Potentialwert, der dem Maximalwert unter allen ersten Schärfebewertungswerten entspricht, als den bevorzugten Grobfokussierungspotenzialwert einstellt.

10. Fokussierungsvorrichtung nach Anspruch **9,** wobei die Konstruktionseinheit umfasst:

  eine erste Berechnungsuntereinheit, die so konfiguriert ist, dass sie einen horizontalen Gradienten und einen vertikalen Gradienten des Zwischenbildes berechnet und die Kantengradientenkarte, die dem Fokusfenster entspricht, auf der Grundlage des horizontalen Gradienten und des vertikalen Gradienten konstruiert; und eine zweite Berechnungsuntereinheit, die so konfiguriert ist, dass sie eine Bildgradientenvarianz der Kantengradientenkarte berechnet und die Bildgradientenvarianz als den ersten Schärfebewertungswert des Fokusfensters bestimmt.

11. Fokussierungsvorrichtung nach Anspruch **7,** ferner umfassend:
ein Erfassungsmodul, das so konfiguriert ist, dass es eine Bewegungserfassung auf dem aktuellen Bild durchführt und in einem Fall, dass ein sich bewegendes Ziel in dem aktuellen Bild erfasst wird, das Grobfokussierungsmodul (**502**) veranlasst, den Grobfokussierungsvorgang auf dem Objektiv in dem ersten Schritt von dem Startpunkt zu dem Endpunkt des Fokussierungsbereichs des Objektivs erneut auszuführen.

12. Elektronische Vorrichtung (**600**), umfassend:

  einen Speicher (**12**), der zum Speichern eines Computerprogramms konfiguriert ist; und einen Prozessor (**11**), der so konfiguriert ist, dass er das Fokussierungsverfahren nach einem der Ansprüche **1** bis **6** durchführt, wenn er das Computerprogramm ausführt.

13. Computerlesbares Speichermedium, das ein Computerprogramm speichert, wobei das Computerprogramm, wenn es von einem Prozessor ausgeführt wird, den Prozessor veranlasst, das Fokussierungsverfahren nach einem der Ansprüche **1** bis **6** durchzuführen.

## Revendications

1. Procédé de mise au point pour capturer une image infrarouge, comprenant:

   la détermination (**S101**) d'une fenêtre de mise au point sur la base d'une image actuelle collectée par un objectif;
   la réalisation (**S102**) d'une opération de mise au point grossière sur l'objectif d'un premier échelon d'un point de départ à un point d'arrivée d'une plage de mise au point de l'objectif, la détermination d'une première valeur d'évaluation de netteté de la fenêtre de mise au point lorsque l'objectif est à une position correspondant à chaque première valeur potentielle, et la définition d'une première valeur potentielle correspondant à une valeur maximale parmi toutes les premières valeurs d'évaluation de netteté comme une valeur potentielle préférée de mise au point grossière, dans lequel la première valeur potentielle est une valeur de module correspondant à une différence entre des tensions aux bornes d'un potentiomètre avant et après le déplacement de l'objectif du premier échelon;
   la réalisation (**S103**) d'une opération de mise au point fine basée sur un algorithme d'escalade sur l'objectif à partir d'une position de départ correspondant à la valeur potentielle préférée de mise au point grossière pour obtenir une valeur d'évaluation de netteté cible et une valeur potentielle préférée de mise au point fine correspondant à la valeur d'évaluation de netteté cible; et
   la réalisation (**S104**) une opération de micro-mise au point sur l'objectif autour de la position correspondant à la valeur potentielle préférée de mise au point grossière, pour rendre une valeur d'évaluation de la netteté de la fenêtre de mise au point, après la réalisation du processus de micro-mise au point, supérieure ou égale à la valeur d'évaluation de la netteté cible,
   dans lequel la réalisation (**S103**) d'une opération de mise au point fine basée sur un algorithme d'escalade sur l'objectif à partir d'une position de départ correspondant à la valeur potentielle préférée de mise au point grossière pour obtenir une valeur d'évaluation de netteté cible et une valeur potentielle préférée de mise au point fine correspondant à la valeur d'évaluation de netteté cible comprend:

   la détermination (**S31**) d'un nombre maximum d'opérations d'inversion de direction et d'une direction cible, et la réalisation (**S32**) de l'opération de mise au point fine sur l'objectif dans la direction cible d'un second échelon, dans lequel une valeur de potentiel correspondant à une position de départ de l'objectif lorsque l'opération de mise au point fine est réalisée pour une première fois est la valeur de potentiel préférée de mise au point grossière, et le second échelon est plus petit que le premier échelon;
   la détermination (**S33**) d'une seconde valeur d'évaluation de netteté de la fenêtre de mise au point lorsque l'objectif est à une position correspondant à une seconde valeur potentielle pendant l'opération de mise au point fine, et la définition d'une valeur maximale parmi toutes les secondes valeurs d'évaluation de netteté comme une valeur d'évaluation de netteté cible candidate, dans lequel la seconde valeur potentielle est une valeur de module correspondant à une différence entre les tensions aux bornes du potentiomètre avant et après le déplacement de l'objectif du second échelon;
   la détermination (**S34**), dans un cas où une condition prédéterminée est satisfaite, si un nombre actuel d'opérations d'inversion de direction est supérieur au nombre maximum d'opérations d'inversion de direction, dans lequel la condition prédéterminée est que n secondes valeurs d'évaluation de netteté consécutives sont dans un ordre décroissant;
   la détermination (**S35**), dans un cas où le nombre actuel d'opérations d'inversion de direction est supérieur au nombre maximal d'opérations d'inversion de direction, d'une valeur maximale parmi toutes les valeurs d'évaluation de netteté cible candidates comme la valeur d'évaluation de netteté cible, et déterminer la valeur potentielle préférée de mise au point fine correspondant à la valeur d'évaluation de netteté cible; et
   la détermination (**S36**), dans un cas où le nombre actuel d'opérations d'inversion de direction est inférieur ou égal au nombre maximum d'opérations d'inversion de direction,
   d'une direction opposée à la direction cible comme la direction cible, et la nouvelle réalisation de l'opération de mise au point fine sur l'objectif dans la direction cible du second échelon.

2. Procédé de mise au point selon la revendication **1**,

dans lequel la détermination d'une fenêtre de mise au point sur la base d'une image actuelle collectée par un objectif comprend:

 la collecte de l'image actuelle par l'objectif, et la division de l'image actuelle en blocs ; et le calcul d'un gradient de chacun des blocs, et la détermination d'un bloc ayant un gradient supérieur à une valeur prédéfinie comme la fenêtre de mise au point.

3. Procédé de mise au point selon la revendication **1,** dans lequel la détermination d'une première valeur d'évaluation de netteté de la fenêtre de mise au point lorsque l'objectif est à une position correspondant à une première valeur potentielle comprend :

 la réalisation d'un filtrage médian sur la fenêtre de mise au point pour obtenir une image intermédiaire lorsque l'objectif est situé à la position correspondant à la première valeur potentielle; et
 la construction d'une carte de gradient de bord correspondant à la fenêtre de mise au point sur la base de l'image intermédiaire, et la détermination d'une caractéristique statistique de la carte de gradient de bord comme la première valeur d'évaluation de netteté de la fenêtre de mise au point.

4. Procédé de mise au point selon la revendication **3,** dans lequel la construction d'une carte de gradient de bord correspondant à la fenêtre de mise au point sur la base de l'image intermédiaire et la détermination d'une caractéristique statistique de la carte de gradient de bord comme la première valeur d'évaluation de la netteté de la fenêtre de mise au point comprend:

 le calcul d'un gradient horizontal et d'un gradient vertical de l'image intermédiaire, et la construction de la carte de gradient de bord correspondant à la fenêtre de mise au point sur la base du gradient horizontal et du gradient vertical; et
 le calcul d'une variance de gradient d'image de la carte de gradient de bord, et la détermination de la variance de gradient d'image comme la première valeur d'évaluation de netteté de la fenêtre de mise au point.

5. Procédé de mise au point selon la revendication **1,** comprenant en outre:
la réalisation d'une détection de mouvement sur l'image courante, et la nouvelle réalisation de l'opération de mise au point grossière sur l'objectif du premier échelon du point de départ au point d'arrivée de la plage de mise au point de l'objectif dans le cas où une cible mobile est détectée dans l'image actuelle.

6. Procédé de mise au point selon la revendication **1,** dans lequel après la détermination de la direction opposée à la direction de la cible comme étant la direction de la cible, le procédé de mise au point comprend en outre:
la mise à jour du second échelon, dans lequel le second échelon est corrélé négativement avec le nombre actuel d'opérations d'inversion de direction.

7. Appareil de mise au point pour capturer une image infrarouge, comprenant:

 un module de détermination (**501**), configuré pour déterminer une fenêtre de mise au point sur la base d'une image actuelle collectée par un objectif;
 un module de mise au point grossière (**502**), configuré pour réaliser une opération de mise au point grossière sur l'objectif d'un premier échelon d'un point de départ à un point d'arrivée d'une plage de mise au point de l'objectif, déterminer une première valeur d'évaluation de netteté de la fenêtre de mise au point lorsque l'objectif est à une position correspondant à chaque première valeur potentielle, et définir une première valeur potentielle correspondant à une valeur maximale parmi toutes les premières valeurs d'évaluation de netteté comme une valeur potentielle préférée de mise au point grossière, dans lequel la première valeur potentielle est une valeur de module correspondant à une différence entre des tensions aux bornes d'un potentiomètre avant et après le déplacement de l'objectif du premier échelon;
 un module de mise au point fine (**503**), configuré pour réaliser une opération de mise au point fine basée sur un algorithme d'escalade sur l'objectif à partir d'une position de départ correspondant à la valeur potentielle préférée de mise au point grossière pour obtenir une valeur d'évaluation de netteté cible et une valeur potentielle préférée de mise au point fine correspondant à la valeur d'évaluation de netteté cible; et
 un module de micro-mise au point (**504**), configuré pour réaliser une opération de micro-mise au point sur l'objectif autour de la position correspondant à la valeur potentielle préférée de mise au point grossière, pour rendre une valeur d'évaluation de la netteté de la fenêtre de mise au point, après la réalisation du processus de micro-mise au point, supérieure ou égale à la valeur d'évaluation de la netteté cible,
 dans lequel le module de mise au point fine (**503**) comprend:

  une deuxième unité de détermination, configurée pour déterminer un nombre maximal d'opérations d'inversion de direction et une direction cible;

une seconde unité de réalisation, configurée pour réaliser l'opération de mise au point fine sur l'objectif dans la direction cible d'un second échelon, dans lequel une valeur potentielle correspondant à une position de départ de l'objectif lorsque l'opération de mise au point fine est réalisée pour une première fois est la valeur potentielle préférée de mise au point grossière, et le second échelon est plus petit que le premier échelon ;

une seconde unité de réglage, configurée pour déterminer une seconde valeur d'évaluation de netteté de la fenêtre de mise au point lorsque l'objectif est à une position correspondant à une seconde valeur potentielle pendant l'opération de mise au point fine, et régler une valeur maximale parmi toutes les secondes valeurs d'évaluation de netteté comme une valeur d'évaluation de netteté cible candidate, dans laquelle la seconde valeur potentielle est une valeur de module correspondant à une différence entre les tensions aux bornes du potentiomètre avant et après le déplacement de l'objectif du second échelon;

une unité de jugement, configurée pour déterminer, dans le cas où une condition prédéterminée est satisfaite, si un nombre actuel d'opérations d'inversion de direction est supérieur au nombre maximum d'opérations d'inversion de direction, dans lequel la condition prédéterminée est que n secondes valeurs d'évaluation de netteté consécutives sont en ordre décroissant, déclencher la troisième unité de détermination pour fonctionner si le nombre actuel d'opérations d'inversion de direction est supérieur au nombre maximum d'opérations d'inversion de direction, et déclencher la quatrième unité de détermination pour fonctionner si le nombre actuel d'opérations d'inversion de direction est inférieur ou égal au nombre maximum d'opérations d'inversion de direction;

une troisième unité de détermination, configurée pour déterminer une valeur maximale parmi toutes les valeurs d'évaluation de netteté cible candidates comme la valeur d'évaluation de netteté cible, et déterminer la valeur potentielle préférée de mise au point fine correspondant à la valeur d'évaluation de netteté cible; et

une quatrième unité de détermination, configurée pour déterminer une direction opposée à la direction cible comme étant la direction cible, et déclencher la seconde unité de réalisation pour qu'elle fonctionne à nouveau.

8. Appareil de mise au point selon la revendication **7,** dans lequel le module de détermination (**501**) comprend:

    une unité de division, configurée pour collecter l'image actuelle par l'objectif, et diviser l'image actuelle en blocs; et
    une première unité de détermination, configurée pour calculer un gradient de chacun des blocs, et déterminer un bloc ayant un gradient supérieur à une valeur prédéfinie comme la fenêtre de mise au point.

9. Appareil de mise au point selon la revendication **7,** dans lequel le module de mise au point grossière comprend (**502**):

    une première unité de réalisation, configurée pour réaliser l'opération de mise au point grossière sur l'objectif du premier échelon du point de départ au point d'arrivée de la plage de mise au point de l'objectif;
    une unité de filtrage, configurée pour réaliser un filtrage médian sur la fenêtre de mise au point pour obtenir une image intermédiaire lorsque l'objectif est situé à la position correspondant à la première valeur potentielle;
    une unité de construction, configurée pour construire une carte de gradient de bord correspondant à la fenêtre de mise au point sur la base de l'image intermédiaire, et déterminer une caractéristique statistique de la carte de gradient de bord comme la première valeur d'évaluation de netteté de la fenêtre de mise au point; et
    une première unité de réglage, configurée pour régler la première valeur potentielle correspondant à la valeur maximale parmi toutes les premières valeurs d'évaluation de netteté comme la valeur potentielle préférée de mise au point grossière.

10. Appareil de mise au point selon la revendication **9,** dans lequel l'unité de construction comprend:

    une première sous-unité de calcul, configurée pour calculer un gradient horizontal et un gradient vertical de l'image intermédiaire, et construire la carte de gradient de bord correspondant à la fenêtre de mise au point sur la base du gradient horizontal et du gradient vertical; et
    une seconde sous-unité de calcul, configurée pour calculer une variance de gradient d'image de la carte de gradient de bord, et déterminer la variance de gradient d'image comme la première valeur d'évaluation de netteté de la fenêtre de mise au point.

11. Appareil de mise au point selon la revendication **7,** comprenant en outre:
un module de détection, configuré pour effectuer une détection de mouvement sur l'image actuelle et déclencher, dans le cas où une cible mobile est détectée dans l'image actuelle, le module de mise au point grossière (**502**) pour réaliser à nouveau l'opération de mise au point grossière sur l'objectif du premier échelon du point de départ au point d'arrivée de la plage de mise au point de l'objectif.

12. Dispositif électronique (**600**) comprenant:

une mémoire (**12**), configurée pour stocker un programme informatique; et
un processeur (**11**), configuré pour réaliser le procédé de mise au point selon l'une quelconque des revendications **1** à **6** lors de l'exécution du programme informatique.

13. Support de stockage lisible par ordinateur stockant un programme informatique, dans lequel le programme informatique, lorsqu'il est exécuté par un processeur, amène le processeur à réaliser le procédé de mise au point selon l'une quelconque des revendications **1** à **6.**

Determine a focus window based on a current image collected by a lens ⟋⟍⟋ S 101

Perform a coarse focusing operation on the lens by a first step from a starting point to an ending point of a focusing range of the lens, determine a first sharpness evaluation value of the focus window when the lens is at a position corresponding to a first potential value, and set a first potential value corresponding to a maximum value among all first sharpness evaluation values as a coarse focusing preferred potential value, where the first potential value is a modulus value corresponding to a difference between voltages across a potentiometer before and after the lens moves by the first step ⟋⟍⟋ S 102

Perform a fine focusing operation based on a hill-climbing algorithm on the lens from a starting position corresponding to the coarse focusing preferred potential value to obtain a target sharpness evaluation value and a fine focusing preferred potential value corresponding to the target sharpness evaluation value ⟋⟍⟋ S 103

Determine a current position of the lens, and perform a micro focusing operation on the lens to make a sharpness evaluation value of the focus window after the micro focusing operation is performed greater than or equal to the target sharpness evaluation value ⟋⟍⟋ S 104

**Figure 1**

Drive the lens to move

Lens

Change resistance value

Division of voltage across the potentiometer changes

Read potential value by using I2C protocol

Motor → Potentiometer → ADC →

**Figure 2**

Determine a maximum number of direction reversing operations and a target direction — S31

Perform the fine focusing operation on the lens in the target direction by a second step, where a potential value corresponding to a starting position of the lens when the fine focusing operation is performed for a first time is the coarse focusing preferred potential value, and the second step is smaller than the first step — S32

Determine a second sharpness evaluation value of the focus window when the lens is at a position corresponding to a second potential value during the fine focusing operation, and set a maximum value among all second sharpness evaluation values as a candidate target sharpness evaluation value, — S33

Determine, in a case that a preset condition is met, whether current number of direction reversing operations is greater than the maximum number of direction reversing operations — S34

no

yes

Determine a maximum value among all candidate target sharpness evaluation values as the target sharpness evaluation value, and determine the fine focusing preferred potential value corresponding to the target sharpness evaluation value — S35

Determine an opposite direction of the target direction as the target direction — S36

**Figure 3**

Initialize the maximum number CountMax of direction reversing operations, the number of direction revering operations k=0, maximum evaluation value Fmax of the first 3 frames, and the potential value Pmax corresponding to the maximum evaluation value Fmax

Calculate an evaluation value f(i) and a potential value p(i) corresponding to the evaluation value f(i)

Fmax <= f(i)(i<=3)

Y

Fmax = f(i), Pmax= p(i)

N

Fmax >= f(i)(i<=3)

N

Y

Motor rotates in a reverse direction, k++, Fmax(k) = Fmax, Pmax(k) = Pmax

k>= CountMax

N

Y

Rank values of Fmax(k) to obtain a maximum value of Fmax(k), assign the maximum value to Fmax, and assign a current potential value Pmax(i) corresponding to Fmax(k) to Pmax

**Figure 4**

Determination module — 501

Coarse focusing module — 502

Fine focusing module — 503

Micro focusing module — 504

**Figure 5**

600

Memory — 12

Processor — 11

Lens — 13

User input apparatus — 14

Display — 15

Motor — 16

**Figure 6**

**EP 3 889 661 B1**

**REFERENCES CITED IN THE DESCRIPTION**

**Patent documents cited in the description**

- CN 103217855 B
- WO 2017157154 A1
- CN 107888836 A
- US 20160014404 A1